# EUROPEAN PATENT SPECIFICATION

(11) **EP 2 683 508 B1**
(45) Date of publication and mention of the grant of the patent: **05.08.2015**
(21) Application number: 11709339.3
(22) Date of filing: 11.03.2011
(51) Int. Cl.: B22D 17/00, B22D 19/00, B60B 5/02, B60B 27/00

(54) **LIGHTWEIGHT FLANGED HUB**
RADNABE MIT RADNABENFLANSCH-LEICHTBAU
MOYEU À BRIDE LÉGER

(43) Date of publication of application: 15.01.2014
(73) Proprietor: SKF BV, 3430 DT Nieuwegein (NL)
(72) Inventor: VISSERS, Cornelius Petrus Antonius, NL-5275 BT Den Dungen (NL); HAANS, Victor, NL-3059 VB Rotterdam (NL); RE, Paolo, I-10042 Nichelino (IT); KNOPF, Andreas, 94469 Deggendorf (DE)
(74) Representative: Burö, Sven Peter
(86) International application number: PCT/EP2011/001215
(87) International publication number: WO 2012/122993

(56) References cited:
- EP-A1- 1 859 958
- EP-A2- 2 006 554
- WO-A1-2005/051681
- WO-A1-2010/063299

## Description

### FIELD OF THE INVENTION

The present invention relates to a flanged hub of a wheel bearing assembly wherein at least a part of the flanged hub is formed from a lightweight metal in a moulding or casting process.

### BACKGROUND

A flanged hub of the above kind is known from US6485188. Specifically, this document concerns a wheel mounting with a bearing race embedded in a cast component. In one embodiment, the cast component is a bearing outer ring with a flange for receiving a vehicle wheel and brake disc. The flanged ring can be made of aluminium which is cast around an insert made of bearing steel that comprises hardened outer raceways. The resulting flanged hub is lighter than a flanged hub made entirely of bearing steel, which benefits the car owner in terms of fuel economy.

One drawback of using aluminium instead of bearing steel is that aluminium is less strong and less stiff. Consequently, the flange part needs to be relatively thicker, in order to withstand the bending stresses which a wheel bearing unit experiences in use.

A further example of a flanged hub comprising a bearing steel part and an aluminium flange part is described in the closest prior art document WO 2010063299. To enhance the bending stiffness of the flange, it is suggested to design the flange part with stiffening ribs, or to execute the bearing steel part with a radial extension that becomes part of the flange. The stiffening ribs provide additional thickness, which increases weight. The radial extension made of bearing steel also increases weight.

Thus, there is still room for improvement in terms of providing a flanged hub which combines optimal weight reduction with excellent flange strength and stiffness.

### DISCLOSURE OF THE INVENTION

The present invention resides in a flanged hub of a wheel bearing unit, which is at least partly formed in a moulding process from a lightweight metal. According to the invention, the lightweight metal comprises fibre reinforcement.

The lightweight metal may comprise magnesium, titanium, aluminium or alloys thereof. The fibre reinforcement may comprise carbon, glass and/or ceramic fibres. The reinforcing fibres have a higher strength-to-weight ratio than the lightweight metal, meaning that the flanged hub is provided with additional strength and stiffness, without an increase in volume and a corresponding increase in weight.

The flanged hub comprises a radially extending flange part and an axially extending hub part. The flange part has mounting holes, to enable the attachment of a vehicle wheel. The hub part comprises a raceway section made of bearing steel, for receiving at least one row of rolling elements. The lightweight metal of the flanged hub is then joined to the raceway section in the moulding process.

Moulding should be understood as a process in which the lightweight metal part of the flanged hub is formed in a moulten state or a semi-moulten state. In a particularly preferred embodiment, the moulding process is a semi-solid metal process, being one of a rheocasting process, a rheoforming process, a rheomoulding process, a thixocasting process, a thixoforming process or a thixomoulding process. In a conventional molten metal process such as casting, the microstructure of the cast metal or metal alloy contains interlocking dendrites that result in material brittleness. The advantage of a semi-solid process is that spherical grains are formed, and the metal has fine, uniform microstructures which give enhanced mechanical properties. Semi-solid metal processing is also less susceptible to air entrapment and a component produced in this way has fewer defects and lower porosity than e.g. a cast component.

In a first embodiment of the invention, the fibre reinforcement comprises short strands of reinforcing fibres which are randomly dispersed throughout the lightweight metal. Suitably, the short strands are added to the lightweight metal when it is in a moulten or semi-solid state, and the resulting mixture is poured into a mould. The advantage of this embodiment is that a strengthened flanged hub is obtained by means of a straightforward manufacturing process.

In a second embodiment, the lightweight metal of the flanged hub comprises localised fibre reinforcement. Suitably, the fibre reinforcement is placed in the mould at the location(s) where the flanged hub, in use, will experience the highest stresses. In a preferred example of the second embodiment, the fibre reinforcement comprises fibres which are oriented in the direction of the highest tensile stresses, to optimise the tensile strength of the flanged hub. In addition, the fibres may be oriented to enhance stiffness in the direction of the highest bending stresses.

The localised fibre reinforcement preferably comprises a fibre cloth. The advantage of a fibre cloth is that it allows the fibre reinforcement to be positioned within the lightweight metal in a straightforward manner. The cloth may comprise strands of reinforcing fibres which are randomly dispersed throughout the cloth. Preferably, the cloth comprises oriented fibres which are woven in predetermined directions, to provided enhanced tensile strength and bending stiffness, as described above.

Other benefits of a flanged hub according to the invention will become clear from the following detailed description and accompanying drawings.

### BRIEF DESCRIPTION OF THE DRAWINGS

- Fig. 1: shows a cross-section of an example of a wheel bearing unit, comprising a first embodiment of a flanged hub according to the invention;
- Fig. 2: shows a cross-section of an example of a wheel bearing unit, comprising a second embodiment of a flanged hub according to the invention;
- Fig. 3a, 3b: show a front view of examples of fibre cloths, suitable for use in a flanged hub according to the second embodiment;
- Fig. 4a, 4b: respectively show a side view and a perspective view of a further example of a flanged hub.

### DETAILED DESCRIPTION

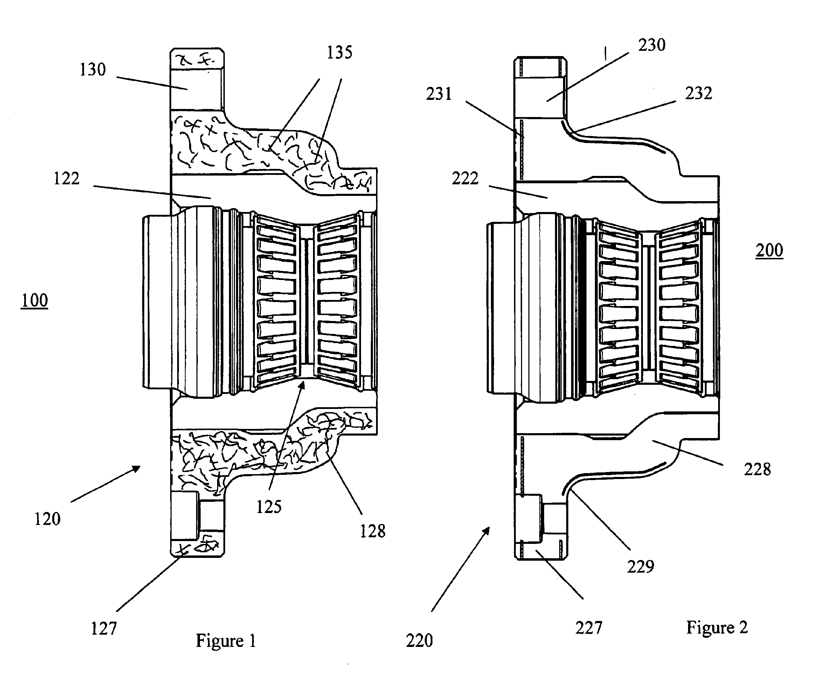

An example of a wheel bearing unit 100 comprising a flanged hub 120 according to the invention is shown in Figure 1. The flanged hub in this example is integrated with a rolling element bearing that is adapted for outer ring rotation. The flanged hub 120 comprises a raceway section 122 made of bearing steel, having a radially inner surface 125 that serves as an outer raceway for a first row and a second row of rolling elements. To reduce the weight, the flanged hub comprises a second section made from a lightweight metal. The second section has a radially extending flange part 127, with mounting holes 130 for the attachment of a vehicle wheel. The second section further comprises an axially extending hub part 128. In this example, the lightweight metal is aluminium, which has been joined to the raceway section 122 in a semi-solid metal process, e.g. a rheocasting process.

In use, a wheel bearing can experience high axial and radial loads. The flanged hub must therefore be able to withstand high tensile stresses and high bending stresses. According to the invention, the strength and stiffness of the flanged hub is enhanced in that the aluminium comprises fibre reinforcement.

In the first embodiment of a flanged hub according to the invention, the fibre reinforcement comprises shorts strands of reinforcing fibres 135, e.g. ceramic fibres, which are randomly dispersed throughout the aluminium. Suitably, these strands are added to the semi-solid aluminium, before it is poured into a mould that surrounds the raceway section 122. The ceramic fibres have a higher strength-to-weight ratio than aluminium, which results in a flanged hub which is stronger and weighs less than a flanged hub that comprises the same volume of aluminium only.

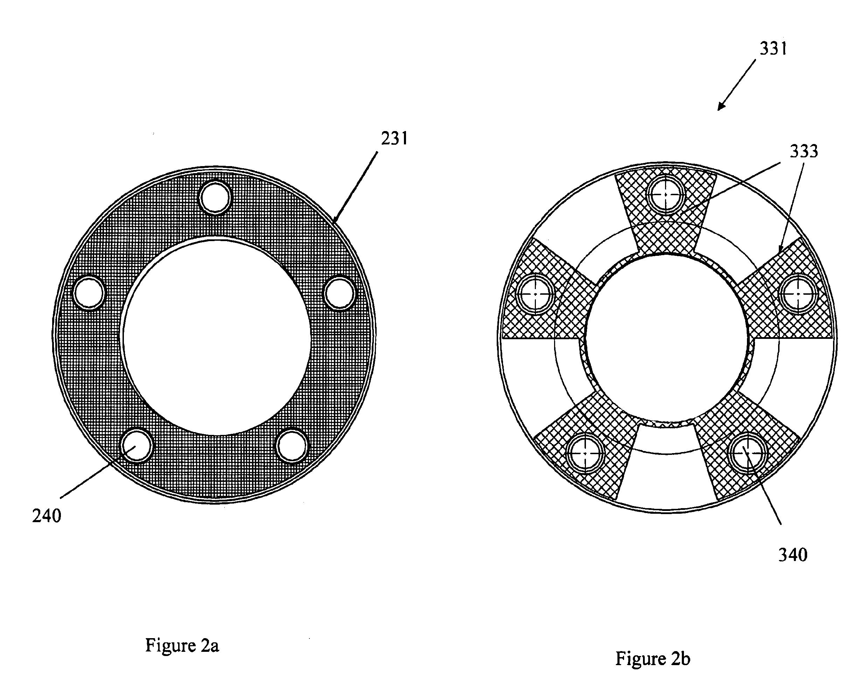

An example of a second embodiment of a flanged hub according to the invention is shown in Figure 2. The flanged hub 220 in this example again forms part of a wheel bearing unit 200, comprising a raceway section 222 made of bearing steel. The second section of the flanged hub, comprising the flange part 227 and the hub part 229, is predominantly made from aluminium that has been joined to a bearing raceway section, as described with reference to Figure 1. In the second embodiment of the invention, however, the aluminium section comprises localised fibre reinforcement.

The fibre reinforcement in the example of Figure 2 comprises a first fibre cloth 231 and a second fibre cloth 232. The fibre cloths comprise e.g. glass fibres which are woven with one or more orientations. The first cloth 231 is placed in the mould near an outboard side of the flange part 227; the second fibre cloth 232 is placed in the mould near an inboard side of the flange part and extends in axial direction, near an outer circumference of the hub part 229. The first fibre cloth 231 and the radially oriented portion of the second fibre cloth 232 reinforce the flange part 227 (wheel mounting flange) and also enhance its bending stiffness.

Suitably, the fibre reinforcement is placed at the locations where the flanged hub 220, in use, will experience the highest stresses. A curved part 229 of the flanged hub, at the transition between the flange part 227 and the hub part 228 is particularly subject to high stresses. The second fibre cloth 232 therefore provides important reinforcement at this location.

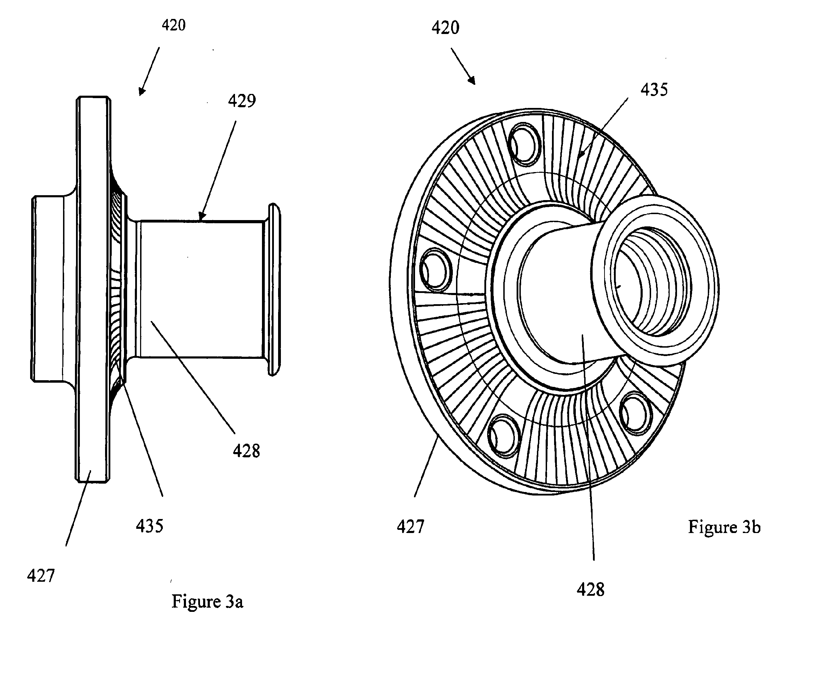

A front view of an example of the first fibre cloth 231 is shown in Figure 3a. The first cloth is essentially disc-shaped with suitable openings 240 corresponding to the locations of the wheel mounting holes. In this example, the first cloth comprises long reinforcing fibres which are woven cross-wise. The second fibre cloth may also comprise a disc-shaped section - for the flange part 227 - and further comprise a sleeve-shaped section - for the hub part 228. The sleeve section may be a continuous cylinder, or may comprise circumferentially arranged strips. Likewise, the disc-shaped section may be a continuous disc, as shown in Figure 3a. Alternatively, as depicted in Figure 3b which shows a further example of a fibre cloth 331, the fibre cloth may comprise radially oriented strips 333. Suitably, the strips are positioned where reinforcement is most needed; i.e. around the wheel mounting holes, and comprise corresponding openings 340.

Since fibre cloths 231, 331 comprise openings 240, 340, these openings may be used to suspend and support the cloths within the mould. Returning to the example of Figure 2, the moulded flanged hub 220 may comprise threaded inserts, which are placed in the mould to create the wheel mounting holes 230. Suitably, the threaded inserts are inserted through the openings in the first and second fibre cloths 231, 232, to enable support and straightforward positioning of the cloths.

A further example of a flanged hub is shown in a side view in Figure 4a and in a perspective view in Figure 4b. The flanged hub 420 comprises a flange part 427 and a hub part 428 which in this example are made from cast aluminium. A radially outer surface 429 of the hub part will serve as a seat for the inner ring of a rolling element bearing. In this example the fibre reinforcement comprises long strands of radially oriented reinforcing fibres made of e.g. carbon. Since the flange part experiences highest tensile stresses in radial direction, the radially oriented fibres 235 provide optimal reinforcement.

The reinforcing fibres 235 are placed within the mould at the required locations, prior to the moulding (casting) process. The fibres may be held in position by means of a thin layer of a polymer matrix material. The polymer material will then melt away when it comes into contact with the moulten aluminium, which is poured into the mould at a temperature of approximately 900 °C.

### Reference numerals

- 100: wheel bearing unit
- 120: flanged hub
- 122: raceway section of flanged hub, made of bearing steel
- 125: radially inner surface of raceway section
- 127: flange part of flanged hub, made of lightweight metal
- 128: hub part of flanged hub, made of lightweight metal.
- 130: wheel mounting hole
- 135: reinforcing fibre

- 200: wheel bearing unit
- 220: flanged hub
- 222: raceway section
- 227: flange part of flanged hub, made of lightweight metal
- 228: hub part of flanged hub, made of lightweight metal
- 229: curved part between flange part and hub part
- 230: wheel mounting hole
- 231: first fibre cloth
- 232: second fibre cloth
- 240: openings in first fibre cloth

- 331: further example of fibre cloth
- 333: radially oriented strips of fibre cloth
- 340: openings in radially oriented strips

- 420: flanged hub
- 427: flange part
- 428: hub part
- 429: radially outer surface of hub part
- 435: radially oriented reinforcing fibres

## Claims

1. Flanged hub (120, 220, 420) for a wheel bearing assembly (100, 200) comprising a radially extending flange part (127, 227, 427) and an axially extending hub part (128, 228, 428), which are at least partly formed in a moulding process from a lightweight metal, wherein the axially extending hub part (120, 220) comprises a section (122, 222) made of bearing steel comprising a raceway for at least one row of rolling elements, and the lightweight metal is joined to the bearing steel section in the moulding process,
**characterized in that**
the lightweight metal comprises integrally moulded fibre reinforcement (135, 231, 232, 331, 435).

2. Flanged hub according to claim 1, wherein the fibre reinforcement comprises short strands of reinforcing fibres (135) randomly dispersed within the lightweight metal.

3. Flanged hub according to claim 1, wherein the fibre reinforcement (231, 232, 331, 435) is locally integrated within the lightweight metal at locations where the flanged hub (220, 420), in use, will experience maximal tensile stresses and/or bending stresses.

4. Flanged hub according to claim 3, wherein the fibre reinforcement comprises a fibre cloth (231, 232, 331) of reinforcing fibres.

5. Flanged hub according to claim 3 or 4, wherein the fibre reinforcement comprises radially oriented reinforcing fibres (435).

6. Flanged hub according to claim 4, wherein the fibre cloth comprises chopped strands of reinforcing fibres randomly dispersed within the cloth.

7. Flanged hub according to any of claims 4 to 6, wherein the fibre cloth (333) comprises radially oriented strips (333) surrounding wheel mounting holes (230) in the flange part (227).

8. Flanged hub according to any preceding claim, wherein the fibre reinforcement comprises reinforcing fibres made of carbon, glass or a ceramic material.

9. Flanged hub according to any preceding claim, wherein the lightweight metal comprises aluminium, titanium, magnesium or alloys thereof.

10. Flanged hub according to any preceding claim, wherein the moulding process is a semi-solid metal process, being one of a rheocasting process, a rheoforming process, a rheomoulding process, a thixocasting process, a thixoforming process or a thixomoulding process.

11. Wheel bearing unit comprising a flanged hub according to any of claims 1 to 10.

## Patentansprüche

1. Radnabe (120, 220, 420) mit Radnabenflansch für eine Radlagerbaugruppe (100, 200), aufweisend ein radial verlaufendes Flanschteil (127, 227, 427) und ein axial verlaufendes Nabenteil (128, 228, 428), die mindestens zum Teil in einem Formprozess aus einem leichtgewichtigen Metall ausgebildet sind, wobei das axial verlaufende Nabenteil (120, 220) einen Teilabschnitt (122, 222) aufweist, der aus Lagerstahl hergestellt ist, aufweisend einen Laufring für mindestens eine Reihe von Rollelementen, und wobei das leichtgewichtige Metall im Formprozess mit dem Lagerstahlteilabschnitt verbunden wird,
**dadurch gekennzeichnet, dass**
das leichtgewichtige Metall einstückig geformte Faserverstärkung (135, 231, 232, 331, 435) aufweist.

2. Radnabe mit Radnabenflansch nach Anspruch 1, wobei die Faserverstärkung kurze Stränge von Verstärkungsfasern (135) aufweist, die willkürlich innerhalb des leichtgewichtigen Metalls verteilt sind.

3. Radnabe mit Radnabenflansch nach Anspruch 1, wobei die Faserverstärkung (231, 232, 331, 435) innerhalb des leichtgewichtigen Metalls lokal an Stellen integriert ist, an denen die Radnabe (220, 420) mit Radnabenflansch im Gebrauch maximale Zugbeanspruchungen und/oder Biegebeanspruchungen erfährt.

4. Radnabe mit Radnabenflansch nach Anspruch 3, wobei die Faserverstärkung ein Fasergewebe (231, 232, 331) aus Verstärkungsfasern aufweist.

5. Radnabe mit Radnabenflansch nach einem der Ansprüche 3 oder 4, wobei die Faserverstärkung radial ausgerichtete Verstärkungsfasern (435) aufweist.

6. Radnabe mit Radnabenflansch nach Anspruch 4, wobei das Fasergewebe gehackte Stränge von Verstärkungsfasern aufweist, die willkürlich innerhalb des Gewebes verteilt sind.

7. Radnabe mit Radnabenflansch nach einem der Ansprüche 4 bis 6, wobei das Fasergewebe (333) radial ausgerichtete Streifen (333) aufweist, die Radmontagelöcher (230) im Flanschteil (227) umgeben.

8. Radnabe mit Radnabenflansch nach einem der vorhergehenden Ansprüche, wobei die Faserverstärkung Verstärkungsfasern aufweist, die aus Kohlenstoff, Glas oder einem Keramikmaterial hergestellt sind.

9. Radnabe mit Radnabenflansch nach einem der vorhergehenden Ansprüche, wobei das leichtgewichtige Metall Aluminium, Titan, Magnesium oder Legierungen davon aufweist.

10. Radnabe mit Radnabenflansch nach einem der vorhergehenden Ansprüche, wobei der Formprozess ein "Semi-Solid Metal"-Prozess ist, der einer eines Rheocast-Prozesses, eines Rheoforming-Prozesses, eines Rheomoulding-Prozesses, eines Thixocast-Prozesses, eines Thixoforming-Prozesses oder eines Thixomoulding-Prozesses ist.

11. Radlagereinheit, aufweisend eine Radnabe mit Radnabenflansch nach einem der Ansprüche 1 bis 10.

## Revendications

1. Moyeu à bride (120, 220, 420) pour un ensemble de palier de roue (100, 200), comprenant une partie de bride s'étendant radialement (127, 227, 427) et une partie de moyeu s'étendant axialement (128, 228, 428), qui sont au moins en partie formées au cours d'un processus de moulage à partir d'un métal léger, la partie de moyeu s'étendant axialement (120, 220) comprenant une section (122, 222) fabriquée en acier à roulement comprenant un chemin de roulement pour au moins une rangée d'éléments de roulement, et le métal léger étant réuni à la section en acier à roulement au cours du processus de moulage,
**caractérisé en ce que**
le métal léger comprend un renfort de fibres moulé intégralement (135, 231, 232, 331, 435).

2. Moyeu à bride selon la revendication 1, dans lequel le renfort de fibres comprend des brins courts de fibres de renforcement (135) dispersés de manière aléatoire à l'intérieur du métal léger.

3. Moyeu à bride selon la revendication 1, dans lequel le renfort de fibres (231, 232, 331, 435) est intégré localement à l'intérieur du métal léger à des emplacements dans lesquels le moyeu à bride (220, 420), pendant l'utilisation, subira des contraintes de traction et/ou des contraintes de flexion maximales.

4. Moyeu à bride selon la revendication 3, dans lequel le renfort de fibres comprend un tissu de fibres (231, 232, 331) constitué de fibres de renforcement.

5. Moyeu à bride selon la revendication 3 ou 4, dans lequel le renfort de fibres comprend des fibres de renforcement orientées radialement (435).

6. Moyeu à bride selon la revendication 4, dans lequel le tissu de fibres comprend des brins coupés de fibres de renforcement dispersés de manière aléatoire à l'intérieur du tissu.

7. Moyeu à bride selon l'une quelconque des revendications 4 à 6, dans lequel le tissu fibreux (333) comprend des rubans orientés radialement (333) entourant des trous de montage de roue (230) dans la partie de bride (227).

8. Moyeu à bride selon l'une quelconque des revendications précédentes, dans lequel le renfort de fibres comprend des fibres de renforcement fabriquées en carbone, en verre ou en un matériau céramique.

9. Moyeu à bride selon l'une quelconque des revendications précédentes, dans lequel le métal léger comprend de l'aluminium, du titane, du magnésium ou des alliages de ceux-ci.

10. Moyeu à bride selon l'une quelconque des revendications précédentes, dans lequel le processus de moulage est un processus de métal semi-solide, choisi parmi un processus de rhéocoulée, de rhéoformage, de rhéomoulage, de thixocoulée, de thixoformage ou de thixomoulage.

11. Unité de palier de roue comprenant un moyeu à bride selon l'une quelconque des revendications 1 à 10.
